# EUROPEAN PATENT APPLICATION

(11) **EP 4 835 988 A1**
(43) Date of publication of application: **04.11.2026**
(21) Application number: 23962680.7
(22) Date of filing: 28.12.2023
(51) Int. Cl.: H01M 4/36, H01M 4/38

(54) **SILICON-CARBON NEGATIVE ELECTRODE MATERIAL AND PREPARATION METHOD THEREFOR, AND LITHIUM ION BATTERY**

(71) Applicant: Shanghai Shanshan New Material Co., Ltd, Shanghai 201306 (CN)
(72) Inventor: SONG, Jian, Shanghai 201306 (CN); LI, Bo, Shanghai 201306 (CN); TIAN, Qiulu, Shanghai 201306 (CN); ZHANG, Jian, Shanghai 201306 (CN)
(74) Representative: karo IP
(86) International application number: PCT/CN2023/142792
(87) International publication number: WO 2025/137999

(57) **Abstract**

A silicon-carbon negative electrode material and a preparation method therefor, and a lithium ion battery. The preparation method comprises: removing an X group in a silane coupling agent to form a first product, wherein the molecular formula of the silane coupling agent is formula (1), the first product is represented by formula (2), n is a positive integer greater than or equal to 1, the X group comprises at least one of an amino group, a chlorine group, a methyl group, a methoxy group and an ethoxy group, and a Y group comprises at least one of a vinyl group, an epoxy group, a methacryloyloxy group, a sulfhydryl group and a urea group; after the first product is gasified, forming silicon-oxygen-carbon composite nanoparticles in holes of porous carbon by means of a pyrolysis reaction and an adsorption-deposition reaction, wherein the silicon-oxygen-carbon composite nanoparticles comprise a silicon-oxygen compound and amorphous silicon, as well as at least one of amorphous carbon and ceramic-phase silicon carbide; and depositing a carbon coating layer on the surfaces of the silicon-oxygen-carbon composite nanoparticles. The method can reduce the production cost and is suitable for industrial application.

## Description

### TECHNICAL FIELD

The present application relates to the field of lithium ion batteries, and in particular, to a silicon-carbon negative electrode material and a preparation method therefor, and a lithium ion battery.

### BACKGROUND

With the increasing demand for energy density of lithium ion batteries, the existing graphite negative electrodes are difficult to meet the future demands. Compared with commercial graphite electrodes, the theoretical specific capacity of silicon electrodes is 10 times larger, being 4200 mAh/g. However, silicon electrodes undergo a large volume change (>300%) during lithiation and delithiation, resulting in particle crushing of the silicon electrodes and poor cycling stability.

Various studies have shown that reducing the particle size of silicon electrodes to the nanoscale and manufacturing carbon coatings on nano-silicon to form nano-silicon-based composite materials as silicon electrodes are methods for inhibiting particle crushing of silicon electrodes and improving cycling stability. However, nano-silicon-based composite materials have low tap density, low coulombic efficiency, and high cost, which inhibit their industrialization. In contrast, micro-silicon-based composite materials, especially modified micro-silicon-based composite materials, are more favored by the industry. The modification methods for the micro-silicon-based composite materials include coating amorphous carbon or graphene on the silicon surface to improve its stability. However, there is still a lack of methods with low cost and capable of large-scale production of micro-silicon-based composite materials with high electrochemical performance.

### BRIEF SUMMARY

One aspect of the present application provides a method for preparing a silicon-carbon negative electrode material, comprising: removing an X group in a silane coupling agent to form a first product, wherein the molecular formula of the silane coupling agent is 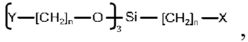 the first product is represented by formula 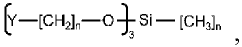 n is a positive integer greater than or equal to 1, the X group comprises at least one of an amino group, a chlorine group, a methyl group, a methoxy group and an ethoxy group, and a Y group comprises at least one of a vinyl group, an epoxy group, a methacryloyloxy group, a sulfhydryl group and a urea group; after the first product is gasified, forming silicon-oxygen-carbon composite nanoparticles in holes of porous carbon by means of a pyrolysis reaction and an adsorption-deposition reaction, wherein the silicon-oxygen-carbon composite nanoparticles comprise a silicon-oxygen compound and amorphous silicon, as well as at least one of amorphous carbon and ceramic-phase silicon carbide; and depositing a carbon coating layer on the surfaces of the silicon-oxygen-carbon composite nanoparticles.

In some embodiments of the present application, the silane coupling agent comprises at least one of 3-(methacryloyloxy)propyltrimethoxysilane, 3-aminopropyltrimethoxysilane and 3-aminopropyltriethoxysilane.

In some embodiments of the present application, a thermal treatment process is employed to remove the X group in the silane coupling agent, and the thermal treatment process is performed in an inert atmosphere and at a temperature of 500°C to 800°C.

In some embodiments of the present application, before the thermal treatment process is employed to remove the X group in the silane coupling agent, the preparation method further comprises: removing impurities in the silane coupling agent at a temperature of 100°C to 200°C.

In some embodiments of the present application, when the X group is an amino group or a chlorine group, the thermal treatment process is performed at a temperature of 500°C to 600°C; when the X group is a methyl group, the thermal treatment process is performed at a temperature of 600°C to 700°C; and when the X group is a methoxy group or an ethoxy group, the thermal treatment process is performed at a temperature of 700°C to 800°C.

In some embodiments of the present application, when the X group is an amino group or a chlorine group, a hydrolysis process is employed to remove the X group in the silane coupling agent.

In some embodiments of the present application, in terms of mass percentage, the silicon-oxygen-carbon composite nanoparticles account for 40% to 50% of the silicon-carbon negative electrode material.

In some embodiments of the present application, the silicon-oxygen-carbon composite nanoparticles fill 40% to 70% of the volume of the holes.

In some embodiments of the present application, in terms of mass percentage, the silicon-oxygen-carbon composite nanoparticles comprise: 80% to 95% of a silicon-oxygen compound, 5% to 10% of amorphous silicon, 0% to 6% of amorphous carbon, and 0% to 4% of ceramic-phase silicon carbide.

In some embodiments of the present application, the reaction temperature for forming the silicon-oxygen-carbon composite nanoparticles in the holes of the porous carbon by means of the pyrolysis reaction and the adsorption-deposition reaction is 900°C to 1000°C.

In some embodiments of the present application, the specific surface area of the porous carbon is 1500 to 2500 m²/g, and the volume of the holes is 0.6 to 1.5 cm³/g.

In some embodiments of the present application, in the holes, the volume of micropores accounts for more than 80% of the volume of the holes, and the remainder is mesopores, wherein the pore diameter of the micropores is less than 2 nm, and the pore diameter of the mesopores is 2 nm to 50 nm.

In some embodiments of the present application, the process of depositing the carbon coating layer on the surfaces of the silicon-oxygen-carbon composite nanoparticles comprises: depositing a first carbon coating layer on the surfaces of the silicon-oxygen-carbon composite nanoparticles; and depositing a second carbon coating layer on the surface of the first carbon coating layer, wherein the first carbon coating layer is an ordered-grown amorphous carbon layer, and the second carbon coating layer has a convex-concave structure on the surface.

Another aspect of the present application further provides a silicon-carbon negative electrode material, comprising: porous carbon, the porous carbon comprising holes, silicon-oxygen-carbon composite nanoparticles being formed in the holes, the silicon-oxygen-carbon composite nanoparticles comprising a silicon-oxygen compound and amorphous silicon, as well as at least one of amorphous carbon and ceramic-phase silicon carbide; and a carbon coating layer being present on the surfaces of the silicon-oxygen-carbon composite nanoparticles.

In some embodiments of the present application, the specific surface area of the porous carbon is 1500 to 2500 m²/g, and the volume of the holes is 0.6 to 1.5 cm³/g.

In some embodiments of the present application, in the holes, the volume of micropores accounts for more than 80% of the volume of the holes, and the remainder is mesopores, wherein the pore diameter of the micropores is less than 2 nm, and the pore diameter of the mesopores is 2 nm to 50 nm.

In some embodiments of the present application, the carbon coating layer comprises: a first carbon coating layer coating the surfaces of the silicon-oxygen-carbon composite nanoparticles; and a second carbon coating layer coating the surface of the first carbon coating layer, wherein the first carbon coating layer is an ordered-grown amorphous carbon layer, and the second carbon coating layer has a convex-concave structure on the surface.

In some embodiments of the present application, the silicon-oxygen-carbon composite nanoparticles fill 40% to 70% of the volume of the holes.

In some embodiments of the present application, in terms of mass percentage, the silicon-oxygen-carbon composite nanoparticles comprise: 80% to 95% of a silicon-oxygen compound, 5% to 10% of amorphous silicon, 0% to 6% of amorphous carbon, and 0% to 4% of ceramic-phase silicon carbide.

Embodiments of the present application further provide a lithium ion battery comprising a negative electrode, the negative electrode comprising any one of the silicon-carbon negative electrode materials according to the embodiments of the present application.

The present application provides a silicon-carbon negative electrode material and a preparation method therefor, using a silane coupling agent as a silicon source. Since the silane coupling agent has low cost and high safety, the preparation method can reduce production costs, and the preparation method is suitable for industrial application.

The method for preparing the silicon-carbon negative electrode material according to the embodiments of the present application uses a silane coupling agent as a silicon source, and employs pyrolysis and adsorption deposition methods to deposit uniformly distributed silicon-oxygen-carbon composite nanoparticles in the holes of the porous carbon matrix. The silicon-oxygen-carbon composite nanoparticles comprise a silicon-oxygen compound and amorphous silicon, as well as at least one of amorphous carbon and ceramic-phase silicon carbide. The amorphous carbon has good electrical conductivity, and the holes in the porous carbon and the ceramic-phase silicon carbide can effectively alleviate the volume expansion of the silicon-oxygen compound and amorphous silicon during the charge-discharge cycling process. The lithium ion battery made of the silicon-carbon negative electrode material has better electrical conductivity and higher first charge capacity and volume ratio.

### BRIEF DESCRIPTION OF THE DRAWINGS

The following drawings describe in detail the exemplary embodiments disclosed in the present application. The same reference numerals in the several views of the drawings indicate similar structures. Those skilled in the art will understand that these embodiments are nonlimiting, exemplary embodiments, and the drawings are only for the purpose of illustration and description, and are not intended to limit the scope of the present application. Other embodiments may also accomplish the inventive intent of the present application in the same manner. It should be understood that the drawings are not drawn to scale. Wherein:
FIG. 1 is a flowchart of a method for preparing a silicon-carbon negative electrode material according to an embodiment of the present application;
FIG. 2 is a schematic structural diagram of a silicon-carbon negative electrode material according to an embodiment of the present application;
FIG. 3 is a schematic structural diagram of equipment used in the method for preparing a silicon-carbon negative electrode material according to an embodiment of the present application; and
FIG. 4 is a scanning electron microscope image of a silicon-carbon negative electrode material according to an embodiment of the present application.

### DETAILED DESCRIPTION OF THE EMBODIMENTS

The following description provides specific application scenarios and requirements of the present application, and is intended to enable those skilled in the art to make and use the contents of the present application. For those skilled in the art, various partial modifications to the disclosed embodiments will be apparent, and the general principles defined herein may be applied to other embodiments and applications without departing from the spirit and scope of the present application. Therefore, the present application is not limited to the shown embodiments, but is consistent with the broadest scope of the claims.

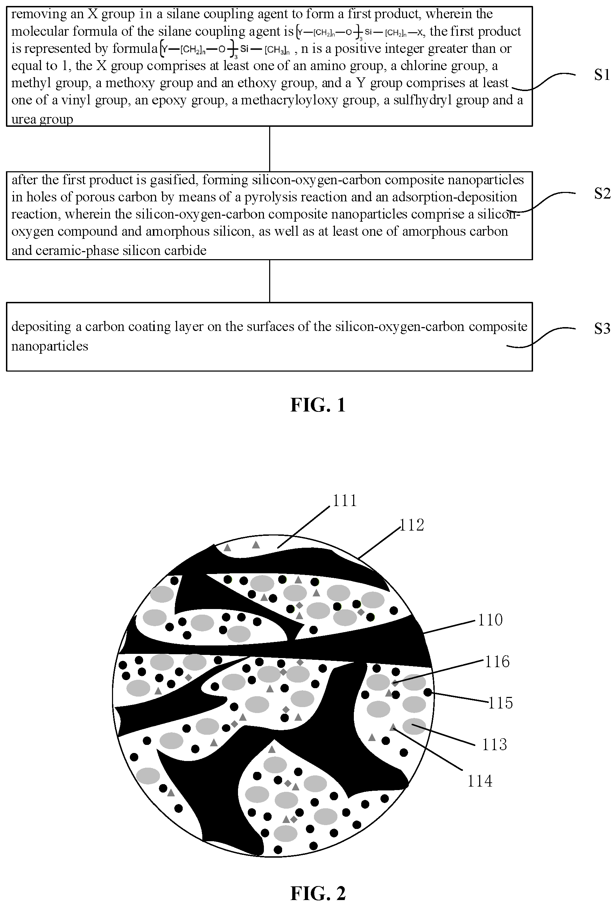

Referring to FIG. 1, the method for preparing a silicon-carbon negative electrode material according to the embodiments of the present application comprises the following steps:
Step S1: removing an X group in a silane coupling agent to form a first product, wherein the molecular formula of the silane coupling agent is 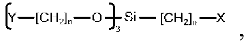 the first product is represented by formula 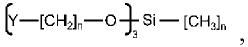 n is a positive integer greater than or equal to 1, the X group comprises at least one of an amino group, a chlorine group, a methyl group, a methoxy group and an ethoxy group, and the Y group comprises at least one of a vinyl group, an epoxy group, a methacryloyloxy group, a sulfhydryl group and a urea group.

In some embodiments of the present application, the silane coupling agent comprises at least one of 3-(methacryloyloxy)propyltrimethoxysilane, 3-aminopropyltrimethoxysilane, and 3-aminopropyltriethoxysilane.

In some embodiments of the present application, when the X group is an amino group or a chlorine group, a hydrolysis process is employed to remove the X group from the silane coupling agent. The hydrolysis process comprises: adding the silane coupling agent to an aqueous solution, the amino group or chlorine group in the silane coupling agent undergoing hydrolysis in the aqueous solution, and after drying the hydrolysis product to remove water therefrom, forming the first product represented by formula

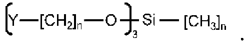

In some embodiments of the present application, a thermal treatment process is employed to remove the X group from the silane coupling agent, the thermal treatment process comprising: performing the process in an inert atmosphere and at a temperature of 500°C to 800°C to form a first product mainly comprising Si, O, and C elements. Specifically, the thermal treatment process comprises: heating the silane coupling agent to the cleavage temperature of the X group under inert gas protection, performing thermal treatment for a specific time until the X group is completely removed, to form the first product represented by formula 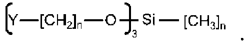 The inert gas is, for example, argon, and the thermal treatment time is, for example, 3 hours to 5 hours.

Since the silane coupling agent typically contains impurities such as moisture, in some embodiments of the present application, before the thermal treatment process is employed to remove the X group from the silane coupling agent, the preparation method further comprises: removing impurities in the silane coupling agent at a temperature of 100°C to 200°C.

Since the X group is bonded to -[CH₂]ₙ- in the form of a chemical bond, different thermal treatment temperatures are required for different X groups to control the chemical bond cleavage. In some embodiments of the present application, when the X group is an amino group or a chlorine group, the thermal treatment process is performed at a temperature of 500°C to 600°C, and the C-N bond will cleave at 500°C to 600°C; when the X group is a methyl group, the thermal treatment process is performed at a temperature of 600°C to 700°C, and the C-C bond will cleave at 600°C to 700°C; and when the X group is a methoxy group or an ethoxy group, the thermal treatment process is performed at a temperature of 700°C to 800°C, and the C-O bond will cleave at 700°C to 800°C.

Since the presence of the X group can, on one hand, destroy the structure of the porous carbon matrix in the subsequent process, and on the other hand, occupy the holes of the porous carbon, so that the silicon-oxygen-carbon composite nanoparticles generated in the subsequent process cannot enter the interior of the holes, thereby deteriorating the cycling performance of the generated silicon-carbon negative electrode material, it is necessary to first remove the X group.

Step S2: after the first product is gasified, forming silicon-oxygen-carbon composite nanoparticles in holes of porous carbon by means of a pyrolysis reaction and an adsorption-deposition reaction, wherein the silicon-oxygen-carbon composite nanoparticles comprise a silicon-oxygen compound and amorphous silicon, as well as at least one of amorphous carbon and ceramic-phase silicon carbide.

In the embodiments of the present application, the temperature for gasifying the first product is 900°C to 1000°C. The process of gasifying the first product may be performed in an evaporation chamber. After the first product is gasified, the gasified first product is introduced into a deposition chamber in which porous carbon is placed. The gasified first product undergoes a pyrolysis reaction in the deposition chamber to form pyrolysis products, and the pyrolysis products undergo an adsorption-deposition reaction in the holes of the porous carbon to form silicon-oxygen-carbon composite nanoparticles, wherein the silicon-oxygen-carbon composite nanoparticles comprise a silicon-oxygen compound and amorphous silicon, as well as at least one of amorphous carbon and ceramic-phase silicon carbide. In some embodiments, the silicon-oxygen-carbon composite nanoparticles comprise a silicon-oxygen compound, amorphous silicon, amorphous carbon, and ceramic-phase silicon carbide. In other embodiments, the silicon-oxygen-carbon composite nanoparticles comprise a silicon-oxygen compound, amorphous silicon, and amorphous carbon. The silicon-oxygen-carbon composite nanoparticles may also comprise a silicon-oxygen compound, amorphous silicon, and ceramic-phase silicon carbide.

In some embodiments of the present application, the deposition time for forming the silicon-oxygen-carbon composite nanoparticles in the holes of the porous carbon by means of the pyrolysis reaction and the adsorption-deposition reaction is 1.5 hours to 4.5 hours, and the deposition temperature is 900°C to 1000°C. Optionally, the deposition time is 2.5 hours, and the deposition temperature is, for example, 940°C, 960°C, and 990°C.

In the embodiments of the present application, the specific surface area of the porous carbon is 1500 to 2500 m²/g, the volume of the holes is 0.6 to 1.5 cm³/g, and in the holes, the volume of micropores accounts for more than 80% of the volume of the holes, and the remainder is mesopores. The pore diameter of the micropores is less than 2 nm, and the pore diameter of the mesopores is 2 nm to 50 nm. The larger specific surface area and larger hole volume of the porous carbon enable more silicon-oxygen-carbon composite nanoparticles to be deposited in the porous carbon, so as to improve the reversible gram capacity, charge-discharge cycling performance, and electrical conductivity of the formed silicon-carbon negative electrode material. The micropores limit the particle sizes of the silicon-oxygen compound, amorphous silicon, amorphous carbon, and ceramic-phase silicon carbide particles formed in the holes.

At the deposition temperature of 900°C to 1000°C, the first product first undergoes a pyrolysis reaction, wherein the C-C bonds and O-C bonds in the first product cleave first, and then the Si-O bonds and Si-C bonds cleave, and the molecules formed by cleavage enter the interior of the holes of the porous carbon through capillary action.

During the pyrolysis reaction, although the C-H bonds and Si-H bonds in the first product also cleave to form H ions, the H ions can react with oxidizing substances in the environment after pyrolysis to generate water vapor, and the water vapor leaves the reaction chamber along with the reaction by-products.

The C atoms generated during the pyrolysis reaction are adsorbed and deposited in the holes to form amorphous carbon, which can greatly improve the electrical conductivity of the silicon-carbon negative electrode material.

The Si atoms and O atoms generated during the pyrolysis reaction are also adsorbed and deposited in the holes, wherein a portion of the Si atoms nucleate and grow in elemental form to become amorphous silicon, and another portion of the Si atoms combine with O atoms and are deposited in the holes in the form of a silicon-oxygen compound. The greater the deposition amount of the amorphous silicon and silicon-oxygen compound as the silicon-carbon negative electrode material, the higher the gram capacity of the silicon-carbon negative electrode material, wherein the theoretical gram capacity of silicon is 4200 mAh/g, and the theoretical gram capacity of the silicon-oxygen compound is 2600 mAh/g.

At the end of the adsorption-deposition reaction, a portion of the previously deposited amorphous carbon atoms and a portion of the previously deposited amorphous silicon atoms in the holes undergo a chemical reaction to generate ceramic-phase silicon carbide SiC. The ceramic-phase silicon carbide has high hardness and is uniformly distributed in the holes. During the charge-discharge cycling process of the silicon-carbon negative electrode material, since the intercalation and deintercalation of lithium ions cause the silicon-carbon negative electrode material to undergo volume expansion, the ceramic-phase silicon carbide can inhibit and alleviate the expansion of the silicon-carbon negative electrode material.

In the embodiments of the present application, by controlling the deposition temperature of the pyrolysis and adsorption-deposition reactions, the cleavage of chemical bonds in the first product 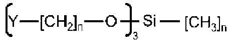 can be controlled, thereby controlling the mass percentages of the amorphous carbon, amorphous silicon, silicon-oxygen compound, and ceramic-phase silicon carbide formed in the holes of the porous carbon. As the reaction time of the pyrolysis and adsorption-deposition reactions increases, the mass percentages of the amorphous carbon, amorphous silicon, silicon-oxygen compound, and ceramic-phase silicon carbide formed in the holes of the porous carbon also change. For example, an increase in the deposition temperature and an increase in the reaction time will reduce the content of amorphous carbon.

In other embodiments, by selecting the type of the silane coupling agent, the content of each molecular group in the first product and the length of the carbon chain can be controlled, thereby controlling the mass percentages of the amorphous carbon, amorphous silicon, silicon-oxygen compound, and ceramic-phase silicon carbide formed in the holes of the porous carbon.

In some embodiments of the present application, in terms of mass percentage, the silicon-oxygen-carbon composite nanoparticles comprise: 80% to 95% of a silicon-oxygen compound, 5% to 10% of amorphous silicon, 0% to 6% of amorphous carbon, and 0% to 4% of ceramic-phase silicon carbide. In some embodiments of the present application, the silicon-oxygen-carbon composite nanoparticles comprise: 90% of a silicon-oxygen compound, 5% of amorphous silicon, 3% of amorphous carbon, and 2% of ceramic-phase silicon carbide. Alternatively, in other embodiments, the silicon-oxygen-carbon composite nanoparticles comprise: 88% of a silicon-oxygen compound, 7% of amorphous silicon, 2% of amorphous carbon, and 3% of ceramic-phase silicon carbide.

In some embodiments of the present application, in terms of mass percentage, the silicon-oxygen-carbon composite nanoparticles account for 40% to 50% of the silicon-carbon negative electrode material.

As the pyrolysis and adsorption-deposition reactions continue, the silicon-oxygen-carbon composite nanoparticles formed in the holes continue to nucleate and grow until they fill the entire holes. Since most of the silicon-oxygen-carbon composite nanoparticles in the embodiments of the present application are formed in micropores, the cross-sectional diameters of more than 80% of the silicon-oxygen-carbon composite nanoparticles are less than or equal to 2 nm. The length of the silicon-oxygen-carbon composite nanoparticles varies with the length of the holes. In some embodiments of the present application, the length of the silicon-oxygen-carbon composite nanoparticles accounts for 40% to 70% of the length of the holes.

In some embodiments of the present application, the silicon-oxygen-carbon composite nanoparticles fill 40% to 70% of the volume of the holes. If the percentage of the volume of the holes filled by the silicon-oxygen-carbon composite nanoparticles is too low, the charge-discharge gram capacity of the silicon-carbon negative electrode material will be reduced; however, a too low percentage means that the unfilled volume in the holes is large, which can effectively alleviate the volume expansion of the silicon-carbon negative electrode material. If the percentage of the volume of the holes filled by the silicon-oxygen-carbon composite nanoparticles is too high, for example, the entire volume of the holes is completely filled by the silicon-oxygen-carbon composite nanoparticles, and even a portion of the silicon-oxygen-carbon composite nanoparticles is deposited on the surface of the porous carbon, then during the slurry preparation process of the silicon-carbon negative electrode material for making a battery negative electrode, the amorphous silicon deposited on the surface of the porous carbon will generate bubbles in the aqueous system; moreover, after the silicon-carbon negative electrode material is made into a battery cell, during the electrochemical cycling process, the amorphous silicon deposited on the surface of the porous carbon undergoes volume expansion, and the portion undergoing volume expansion is not supported by the carbon skeleton of the porous carbon, making the structure of the battery cell more susceptible to rupture.

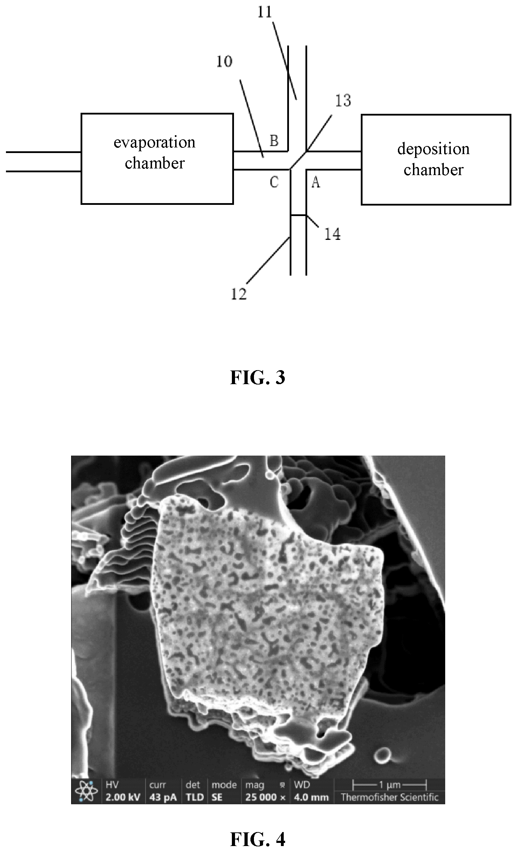

In the embodiments of the present application, as shown in FIG. 3, the process of removing the X group in the silane coupling agent using the thermal treatment process and the process of gasifying the first product may be performed in an evaporation chamber, and the pyrolysis and adsorption-deposition reactions may be performed in a deposition chamber. The evaporation chamber and the deposition chamber may be connected through a first pipeline 10, and a second pipeline 11 and a third pipeline 12 may also be connected to the first pipeline 10. The second pipeline 11 and the third pipeline 12 are communicable with each other at the connection point with the first pipeline 10, a three-way switch 13 is provided at the connection point, and a one-way valve 14 is provided on the third pipeline 12. After the first product is gasified in the evaporation chamber, the three-way switch 13 is set to point B, and the one-way valve is closed, then the gasified first product is introduced from the evaporation chamber into the deposition chamber. Porous carbon is placed in the deposition chamber, and the porous carbon undergoes a chemical vapor deposition reaction with the gasified first product to generate the silicon-oxygen-carbon composite nanoparticles. By controlling the opening and closing of the three-way switch, the flow rate of the gasified first product entering the deposition chamber can be adjusted, thereby adjusting the mass percentages of the carbon element, oxygen element, and silicon element in the silicon-oxygen-carbon composite nanoparticles.

When the thermal treatment process is employed in the evaporation chamber to remove the X group in the silane coupling agent, the three-way switch 13 is switched to point A, and the one-way valve is closed, so that the impurity groups generated by decomposition during the thermal treatment process are discharged through the second pipeline 11. If the deposition reaction for forming the carbon coating layer is also performed in the deposition chamber, when depositing the carbon coating layer, the one-way valve is opened, the three-way switch is set to point C, and the carbon source gas for forming the carbon coating layer enters the deposition chamber from the third pipeline 12 for coating.

Step S3: depositing a carbon coating layer on the surfaces of the silicon-oxygen-carbon composite nanoparticles.

In the embodiments of the present application, the reaction for forming the carbon coating layer may be performed in a chemical vapor deposition apparatus, or may be performed in the deposition chamber shown in FIG. 3. The raw material gas for forming the carbon coating layer is a carbon-containing gas, for example, at least one of methane, acetylene, or propane. The flow rate of the raw material gas is 1 to 5 L/min, the reaction temperature is 600 to 900°C, and the reaction time is 1 to 10 hours.

In one embodiment of the present application, the process of depositing the carbon coating layer on the surfaces of the silicon-oxygen-carbon composite nanoparticles comprises: depositing a first carbon coating layer on the surfaces of the silicon-oxygen-carbon composite nanoparticles; and depositing a second carbon coating layer on the surface of the first carbon coating layer, wherein the first carbon coating layer is an ordered-grown amorphous carbon layer, and the second carbon coating layer has a convex-concave structure on the surface.

In one embodiment of the present application, the first carbon coating layer is first deposited on the surfaces of the silicon-oxygen-carbon composite nanoparticles, for example, acetylene is first used as the raw material gas for the CVD reaction, and the reaction conditions are: the flow rate of acetylene gas is 1 to 3 L/min, the reaction temperature is 600 to 700°C, and the reaction time is 1 to 5 hours; then the second carbon coating layer is deposited on the surface of the first carbon coating layer, for example, methane is used as the raw material gas for the CVD reaction, and the reaction conditions are: the flow rate of methane gas is 1 to 3 L/min, the reaction temperature is 600 to 900°C, and the reaction time is 1 to 10 hours.

The embodiment of the present application deposits the first carbon coating layer and the second carbon coating layer on the surfaces of the silicon-oxygen-carbon composite nanoparticles. On one hand, the first carbon coating layer and the second carbon coating layer formed on the surfaces of the silicon-oxygen-carbon composite nanoparticles are carbon layers with different structures, wherein the first carbon coating layer can provide a uniform coating layer and structure, and the second carbon coating layer provides a rich conductive network.

The embodiments of the present application further provide a silicon-carbon negative electrode material, comprising: porous carbon, the porous carbon comprising holes, silicon-oxygen-carbon composite nanoparticles being formed in the holes, the silicon-oxygen-carbon composite nanoparticles comprising a silicon-oxygen compound and amorphous silicon, as well as at least one of amorphous carbon and ceramic-phase silicon carbide; and a carbon coating layer being present on the surfaces of the silicon-oxygen-carbon composite nanoparticles.

The schematic structural diagram of the silicon-carbon negative electrode material formed according to the embodiments of the present application is shown in FIG. 2. As can be seen from the figure, the skeleton of the silicon-carbon negative electrode material is porous carbon 110, the holes 111 of the porous carbon 110 are deposited with a silicon-oxygen compound 113, amorphous silicon 114, amorphous carbon 115, and ceramic-phase silicon carbide 116, and the carbon coating layer 112 coats the surfaces of the silicon-oxygen-carbon composite nanoparticles. The silicon-oxygen compound 113, amorphous silicon 114, amorphous carbon 115, and ceramic-phase silicon carbide 116 are relatively uniformly distributed in the holes 111.

In the embodiments of the present application, the specific surface area of the porous carbon is 1500 to 2500 m²/g, the volume of the holes is 0.6 to 1.5 cm³/g, and in the holes, the volume of micropores accounts for more than 80% of the volume of the holes, and the remainder is mesopores. The pore diameter of the micropores is less than 2 nm, and the pore diameter of the mesopores is 2 nm to 50 nm.

In the embodiments of the present application, the carbon coating layer comprises: a first carbon coating layer coating the surfaces of the silicon-oxygen-carbon composite nanoparticles; and a second carbon coating layer coating the surface of the first carbon coating layer, wherein the first carbon coating layer is an ordered-grown amorphous carbon layer, and the second carbon coating layer has a convex-concave structure on the surface.

In the embodiments of the present application, the holes are not completely filled, and the silicon-oxygen-carbon composite nanoparticles fill 40% to 70% of the volume of the holes.

In some embodiments of the present application, in terms of mass percentage, the silicon-oxygen-carbon composite nanoparticles comprise: 80% to 95% of a silicon-oxygen compound, 5% to 10% of amorphous silicon, 0% to 6% of amorphous carbon, and 0% to 4% of ceramic-phase silicon carbide.

The present application provides a silicon-carbon negative electrode material and a preparation method therefor, using a silane coupling agent as a silicon source. Since the silane coupling agent has low cost and high safety, the preparation method can reduce production costs, and the preparation method is suitable for industrial application.

The method for preparing the silicon-carbon negative electrode material according to the embodiments of the present application uses a silane coupling agent as a silicon source, and employs pyrolysis and adsorption deposition methods to deposit uniformly distributed silicon-oxygen-carbon composite nanoparticles in the holes of the porous carbon matrix. The silicon-oxygen-carbon composite nanoparticles comprise a silicon-oxygen compound and amorphous silicon, as well as at least one of amorphous carbon and ceramic-phase silicon carbide. The amorphous carbon has good electrical conductivity, and the holes in the porous carbon and the ceramic-phase silicon carbide can effectively alleviate the volume expansion of the silicon-oxygen compound and amorphous silicon during the charge-discharge cycling process. The lithium ion battery made of the silicon-carbon negative electrode material has better electrical conductivity and higher first charge capacity and volume ratio.

The present application further provides a lithium ion battery, the lithium ion battery comprising a negative electrode, the negative electrode comprising the silicon-carbon negative electrode material according to any of the embodiments.

The present application does not limit the preparation method of the negative electrode sheet. This embodiment only provides an implementable preparation method: a mixture of the silicon-carbon negative electrode material, a binder, and a conductive agent is slurried and then coated on a copper foil, and after vacuum drying and roller pressing, the negative electrode sheet is obtained. The mass ratio of the silicon-carbon negative electrode material, the binder, and the conductive agent may be 70:20:10. The conductive agent may be conductive carbon black, the binder may be any commercially available binder for lithium ion batteries, and the dispersant may be deionized water.

The present application does not limit the preparation method of the lithium ion battery. This embodiment is only one possible preparation method: using a mixed solvent of 1 mol/L LiPF₆ as an electrolyte, a polypropylene microporous membrane as a separator, a metal lithium sheet as a counter electrode, preparing the negative electrode of the lithium ion battery using the silicon-carbon negative electrode material prepared according to any of the embodiments of the present application, and assembling a coin cell in an inert gas glove box system filled with argon to obtain the lithium ion battery.

### Example 1:

Step S1 was performed, using a thermal treatment process to remove impurities from the silane coupling agent. First, 100 g of a silane coupling agent (3-aminopropyltriethoxysilane) was placed in an evaporation chamber, heated to 700°C under an argon atmosphere to remove the amino group from the 3-aminopropyltriethoxysilane, and reacted at a constant temperature for 3 hours to obtain the first product.

Step S2 was performed, 100 g of porous carbon was placed in a deposition chamber, the temperature of the evaporation chamber was raised to 900°C, the first product was gasified and evaporated and then introduced into the deposition chamber, so that the temperature in the deposition chamber was the same as the evaporation temperature of the evaporation chamber as the deposition temperature, a chemical vapor deposition reaction occurred in the deposition chamber with a deposition time of 2.5 hours to obtain silicon-oxygen-carbon composite nanoparticles.

Step S3 was performed, acetylene was introduced into the deposition chamber at a flow rate of 0.5 L/min, a coating temperature of 600°C, and a coating time of 3 hours, to obtain a silicon-carbon negative electrode material having a carbon coating layer on the surface.

Referring to FIG. 4, an SEM image of a cross-section of the silicon-carbon negative electrode material formed by the method of Example 1 shows that there are partially unfilled holes in the silicon-oxygen-carbon composite nanoparticles, indicating that the porous carbon is not completely filled. The unfilled holes can alleviate the volume expansion of the silicon-carbon negative electrode material during the charge-discharge cycling process. Moreover, silicon-oxygen-carbon composite nanoparticles are formed in the holes, and the silicon-oxygen-carbon composite nanoparticles comprise various different particles such as amorphous carbon, amorphous silicon, a silicon-oxygen compound, and ceramic-phase silicon carbide.

### Example 2

Relative to Example 1, the mass of the silane coupling agent (3-aminopropyltriethoxysilane) was changed to 50 g.

### Example 3

Relative to Example 1, the mass of the silane coupling agent (3-aminopropyltriethoxysilane) was changed to 200 g.

### Example 4

Relative to Example 1, the temperature in Step S1 was adjusted to 400°C.

### Example 5

Relative to Example 1, the temperature in Step S1 was adjusted to 1000°C.

### Example 6

Relative to Example 1, the reaction time in Step S1 was adjusted to 1 hour.

### Example 7

Relative to Example 1, the reaction time in Step S1 was adjusted to 5 hours.

### Example 8

Relative to Example 1, the deposition temperature in Step S2 was adjusted to 700°C.

### Example 9

Relative to Example 1, the deposition temperature in Step S2 was adjusted to 1100°C.

### Example 10

Relative to Example 1, the deposition time in Step S2 was adjusted to 1 hour.

### Example 11

Relative to Example 1, the deposition time in Step S2 was adjusted to 4 hours.

### Example 12

Relative to Example 1, the coating temperature in Step S3 was adjusted to 500°C.

### Example 13

Relative to Example 1, the coating temperature in Step S3 was adjusted to 700°C.

### Example 14

Relative to Example 1, the coating time in Step S3 was adjusted to 1 hour.

### Example 15

Relative to Example 1, the coating time in Step S3 was adjusted to 5 hours.

### Example 16

Relative to Example 1, the acetylene flow rate in Step S3 was adjusted to 0.1 L/min.

### Example 17

Relative to Example 1, the acetylene flow rate in Step S3 was adjusted to 1.0 L/min.

### Example 18

In Step S1, a hydrolysis process was used to remove impurities in the silane coupling agent. Firstly, 100 mL of a silane coupling agent (3-aminopropyltriethoxysilane) was placed in an aqueous solution and stirred at a high speed for 1 hour to allow sufficient hydrolysis, removing the amino group in the 3-aminopropyltriethoxysilane, and then the water in the aqueous solution was evaporated to obtain the first product. The remaining steps were the same as in Example 1.

### Example 19

Relative to Example 1, the temperature in Step S1 was adjusted to 500°C.

### Example 20

Relative to Example 1, the temperature in Step S1 was adjusted to 600°C.

### Example 21

Relative to Example 1, the silane coupling agent in Step S1 was adjusted to 3-(methacryloyloxy)propyltrimethoxysilane.

### Example 22

Relative to Example 1, the silane coupling agent in Step S1 was adjusted to 3-aminopropyltrimethoxysilane.

Table 1 shows the effect of different masses of the silane coupling agent on the electrochemical performance of the lithium ion batteries made from the silicon-carbon negative electrode materials. Under otherwise identical conditions, only the mass of the silane coupling agent (3-aminopropyltriethoxysilane) as a reactant was changed, and the differences in the electrochemical performance of the lithium ion batteries made from the resulting silicon-carbon negative electrode materials are shown. As can be seen from Table 1, the greater the mass of the silane coupling agent, the higher the first charge capacity and first coulombic efficiency of the corresponding lithium ion batteries made from the resulting silicon-carbon negative electrode material. This indicates that the greater the mass of the silane coupling agent, the more silicon-oxygen-carbon composite nanoparticles will be generated. However, the mass of the silane coupling agent as a reactant cannot be too large. When the mass of the silane coupling agent is too large, after the holes in the porous carbon are filled, the generated silicon-oxygen-carbon composite nanoparticles will deposit on the surface of the porous carbon. The silicon-oxygen-carbon composite nanoparticles deposited on the surface of the porous carbon will have higher activity, and will undergo volume expansion during the charge-discharge process of the lithium ion battery, which will lead to poor cycling performance.

**Table 1. Effect of Different Masses of Silane Coupling Agent on Electrochemical Performance of Lithium Ion Batteries Made from the Silicon-Carbon Negative Electrode Materials**

| | **Mass of Silane Coupling Agent (g)** | **First Charge Capacity (mAh/g)** | **First Coulombic Efficiency (%)** | **200-Cycle Capacity Retention (%)** |
|---|---|---|---|---|
| Example 1 | 100 | 1267.4 | 86.3 | 86 |
| Example 2 | 50 | 1020.7 | 80.2 | 90 |
| Example 3 | 200 | 1472.3 | 90.6 | 65 |

In the present application, the 200-cycle capacity retention refers to the capacity retention of the lithium ion battery after 200 charge-discharge cycles, tested after the silicon-carbon negative electrode material prepared in the examples is made into a lithium ion battery. When the content of the silicon-oxygen compound and amorphous silicon in the silicon-carbon negative electrode material is high, the volume expansion during the charge-discharge cycling process of the lithium ion battery becomes larger, resulting in poor charge-discharge cycling performance of the lithium ion battery. When the deposition amount of the silicon-oxygen-carbon composite nanoparticles in the holes is greater, the volume of the holes not filled by the silicon-oxygen-carbon composite nanoparticles becomes smaller, resulting in poor charge-discharge cycling performance of the lithium ion battery.

Table 2 shows the effect of different reaction temperatures and reaction times in Step S1, as well as different process methods (thermal decomposition process or hydrolysis process) for removing the amino group from 3-aminopropyltriethoxysilane to obtain the first product, on the electrochemical performance of the lithium ion batteries made from the resulting silicon-carbon negative electrode materials. Under otherwise identical conditions, only the reaction temperature and reaction time of the thermal decomposition method were changed, and the differences in the electrochemical performance of the lithium ion batteries made from the resulting silicon-carbon negative electrode materials are shown.

**Table 2. Effect of Different Thermal Treatment Temperatures and Times on Electrochemical Performance of Lithium Ion Batteries Made from the Silicon-Carbon Negative Electrode Materials**

| | **Process Conditions for Removing X Group in Step S1** | **First Charge Capacity (mAh/g)** | **First Coulombic Efficiency (%)** | **200-Cycle Capacity Retention (%)** |
|---|---|---|---|---|
| Example 1 | Thermal treatment: 700°C/3h | 1267.4 | 86.3 | 86 |
| Example 4 | Thermal treatment: 400°C/3h | 924.8 | 69.5 | 68 |
| Example 5 | Thermal treatment: 1000°C/3h | 628.5 | 70.4 | 91 |
| Example 18 | Hydrolysis process | 1067.4 | 77.3 | 80 |
| Example 19 | Thermal treatment: 500°C/3h | 1053.8 | 75.2 | 79 |
| Example 20 | Thermal treatment: 600°C/3h | 1201.2 | 82.5 | 84 |
| Example 6 | Thermal treatment: 700°C/1h | 1131.3 | 79.8 | 76 |
| Example 7 | Thermal treatment: 700°C/5h | 1300.5 | 87.2 | 78 |

As can be analyzed from Table 2, since the silane coupling agent contains the X group, as the thermal treatment proceeds, water and the X group in the silane coupling agent are removed as impurities. However, when the temperature of the thermal treatment process is too high and the reaction time is too long, it will lead to the loss of the siloxane component in the silane coupling agent, thereby causing a decrease in the first charge capacity of the lithium ion batteries made from the resulting silicon-carbon negative electrode material. When the temperature of the thermal treatment process is too low and the reaction time is too short, it will lead to residual X groups in the silane coupling agent, and these residual X groups will evaporate into the interior of the porous carbon in the subsequent process, which will have a significant adverse effect on the electrochemical performance of the formed silicon-carbon negative electrode material.

As can also be seen from the data in Table 2, when the thermal treatment process is at 400°C, the amino group in the silane coupling agent cannot be removed (Example 4), thus resulting in lower first charge capacity, first coulombic efficiency, and 200-cycle capacity retention of the resulting silicon-carbon negative electrode material. When the thermal treatment temperature reaches 500°C for 3 hours, the amino group in the silane coupling agent can be completely removed, thereby increasing the proportion of amorphous silicon and silicon-oxygen compound in the silicon-oxygen-carbon composite nanoparticles, resulting in improved first coulombic efficiency and first charge capacity of the resulting silicon-carbon negative electrode material.

When the thermal treatment process is at 600°C for 3 hours, not only is the amino group in the silane coupling agent completely removed, but the amorphous carbon content in the silicon-oxygen-carbon composite nanoparticles is further reduced, so that the proportion of amorphous silicon and silicon-oxygen compound in the silicon-oxygen-carbon composite nanoparticles in the subsequent process is further increased, and the first coulombic efficiency and first charge capacity of the resulting silicon-carbon negative electrode material are further improved. The reduction of the amorphous carbon content in the silicon-oxygen-carbon composite nanoparticles correspondingly reduces the electrical conductivity of the silicon-carbon negative electrode material, and the increased reserved holes lead to a corresponding increase in the charge-discharge cycling capability of the silicon-carbon negative electrode material.

When the thermal treatment process is at 1000°C for 3 hours, not only is the amino group in the silane coupling agent completely removed, but the C-C bonds in the first powder material are completely cleaved, and the Si-O and Si-C bonds are partially cleaved, thereby causing the loss of amorphous silicon and silicon-oxygen compound, which causes a decrease in the first coulombic efficiency and first charge capacity of the silicon-carbon negative electrode material. At the same time, in the subsequent process, the unfilled holes in the porous carbon are increased, resulting in a corresponding increase in the charge-discharge cycling capability of the silicon-carbon negative electrode material.

It can also be seen from Table 2 that although the hydrolysis process can remove the amino group from the silane coupling agent, compared with the thermal treatment process, the improvement in the electrochemical performance of the resulting silicon-carbon negative electrode material is not as significant.

When the thermal treatment process is at a reaction temperature of 700°C for different reaction times, it can be found that when the reaction time is too short, due to the reduction of the amorphous carbon content in the silicon-oxygen-carbon composite nanoparticles in the subsequent process, the proportion of amorphous silicon and silicon-oxygen compound in the silicon-oxygen-carbon composite nanoparticles increases, thereby causing an increase in the first charge capacity and first coulombic efficiency. However, the reduction of the amorphous carbon content in the silicon-oxygen-carbon composite nanoparticles leads to poorer electrical conductivity of the silicon-carbon negative electrode material, thereby causing poorer charge-discharge cycling capability of the silicon-carbon negative electrode material. A large amount of amorphous carbon will also cause overfilling, resulting in a decrease in the volume of the unfilled portion in the holes of the porous carbon, which is unfavorable for the volume expansion of the formed silicon-carbon negative electrode material during charge-discharge cycling, thereby causing poorer charge-discharge cycling capability of the silicon-carbon negative electrode material.

Table 3 shows the effect of different deposition temperatures and deposition times in the evaporation chamber in Step S2 on the electrochemical performance of the lithium ion batteries made from the resulting silicon-carbon negative electrode materials. Under otherwise identical conditions, only the deposition temperature and deposition time in the deposition chamber in Step S2 were adjusted, and the differences in the electrochemical performance of the lithium ion batteries made from the resulting silicon-carbon negative electrode materials are shown.

**Table 3. Effect of Different Deposition Temperatures and Deposition Times on Electrochemical Performance of Lithium Ion Batteries Made from the Silicon-Carbon Negative Electrode Materials**

| | **Deposition Temperature (°C) / Deposition Time (h) in Step S2** | **First Charge Capacity (mAh/g)** | **First Coulombic Efficiency (%)** | **200-Cycle Capacity Retention (%)** |
|---|---|---|---|---|
| Example 1 | 900/2.5 | 1267.4 | 86.3 | 86 |
| Example 8 | 700/2.5 | 1182.4 | 80.2 | 90 |
| Example 9 | 1100/2.5 | 1065.3 | 80.0 | 87 |
| Example 10 | 900/1 | 1198.4 | 82.9 | 90 |
| Example 11 | 900/4 | 1266.7 | 86.8 | 86 |

As can be analyzed from Table 3, the higher the deposition temperature and the longer the deposition time, the faster the gasified first product decomposes in the chemical vapor deposition reaction; moreover, a higher deposition temperature means a higher evaporation temperature in the evaporation chamber, and the mass of the gasified first product evaporated per unit time is greater, the contact between the gasified first product and the porous carbon increases, and the efficiency of depositing silicon-oxygen-carbon composite nanoparticles in the holes of the porous carbon is higher. However, if the deposition temperature is too high and the deposition time is too long, the Si and C deposited in the porous carbon will continuously react to generate ceramic-phase SiC. Too much ceramic-phase SiC leads to a decrease in the first charge capacity and first coulombic efficiency of the lithium ion battery, but the ceramic-phase SiC also plays a supporting role during the electrochemical cycling process of the lithium ion battery, which is beneficial for cycling. Therefore, it is necessary to control the amount of ceramic-phase SiC generated. If the deposition temperature is too low, as in Example 8, Si-O and Si-C cannot cleave at the deposition temperature, thereby preventing the formation of amorphous silicon in the holes of the porous carbon, and causing the first charge capacity and first coulombic efficiency of the lithium ion battery to be lower than those of Example 1.

Table 4 shows the effect of different coating temperatures and coating times in Step S3 for depositing the carbon coating layer on the electrochemical performance of the lithium ion batteries made from the resulting silicon-carbon negative electrode materials. Under otherwise identical conditions, only the coating temperature and coating time for depositing the carbon coating layer in Step S3 were adjusted, and the differences in the electrochemical performance of the lithium ion batteries made from the resulting silicon-carbon negative electrode materials are shown.

**Table 4. Effect of Different Coating Temperatures and Coating Times on Electrochemical Performance of Lithium Ion Batteries Made from the Silicon-Carbon Negative Electrode Materials**

| | **Coating Temperat ure (°C) / Coating Time (h) in Step S3** | **First Charge Capacity (mAh/g)** | **First Coulombic Efficiency (%)** | **Carbon Content (%)** | **Amorphous Silicon Grain Size (nm)** | **200-Cycle Capacity Retention (%)** |
|---|---|---|---|---|---|---|
| Example 1 | 600/3 | 1267.4 | 86.3 | 5.3 | 2.3 | 86 |
| Example 12 | 500/3 | 1292.3 | 85.2 | 4.0 | 2.3 | 84 |
| Example 13 | 700/3 | 1220.3 | 87.4 | 6.2 | 3.6 | 80 |
| Example 14 | 600/1 | 1298.4 | 83.9 | 4.3 | 2.1 | 84 |
| Example 15 | 600/5 | 1210.7 | 87.8 | 6.4 | 4.2 | 79 |

As can be analyzed from Table 4, as the coating temperature increases and the coating time increases, the thickness of the formed carbon coating layer increases (manifested as an increase in carbon content). The increase in the thickness of the carbon coating layer leads to a decrease in the first charge capacity of the lithium ion battery, an increase in the first coulombic efficiency, and an improvement in the 200-cycle capacity retention. However, if the coating temperature is too high and the coating time is too long, it will cause the growth of amorphous silicon grains in the holes of the porous silicon, resulting in poor cycling capability of the lithium ion battery.

Table 5 shows the effect of different acetylene flow rates in Step S3 for depositing the carbon coating layer on the electrochemical performance of the lithium ion batteries made from the resulting silicon-carbon negative electrode materials. Under otherwise identical conditions, only the acetylene flow rate for depositing the carbon coating layer in Step S3 was adjusted, and the differences in the electrochemical performance of the lithium ion batteries made from the resulting silicon-carbon negative electrode materials are shown.

**Table 5. Effect of Different Acetylene Flow Rates on Electrochemical Performance of Lithium Ion Batteries Made from the Silicon-Carbon Negative Electrode Materials**

| | **Acetylene Flow Rate (L/min)** | **First Charge Capacity (mAh/g)** | **First Coulombic Efficiency (%)** | **Carbon Content (%)** | **Amorphous Silicon Grain Size (nm)** | **200-Cycle Capacity Retention (%)** |
|---|---|---|---|---|---|---|
| Example 1 | 0.5 | 1267.4 | 86.3 | 5.3 | 2.3 | 86 |
| Example 16 | 0.1 | 1294.3 | 85.4 | 3.7 | 2.3 | 84 |
| Example 17 | 1.0 | 1223.7 | 87.2 | 6.8 | 3.6 | 87.5 |

As can be analyzed from Table 5, as the acetylene flow rate increases, the thickness of the formed coating layer increases (manifested as an increase in carbon content), which leads to a decrease in the first charge capacity of the lithium ion battery, an increase in the first coulombic efficiency, and an improvement in the 200-cycle capacity retention.

Table 6 shows the effect of different silane coupling agents in Step S1 on the electrochemical performance of the lithium ion batteries made from the resulting silicon-carbon negative electrode materials. Under otherwise identical conditions, only the silane coupling agent in Step S1 was adjusted, and the differences in the electrochemical performance of the lithium ion batteries made from the resulting silicon-carbon negative electrode materials are shown.

**Table 6. Effect of Different Silane Coupling Agents on Electrochemical Performance of Lithium Ion Batteries Made from the Silicon-Carbon Negative Electrode Materials**

| | **Silane Coupling Agent** | **First Charge Capacity (mAh/g)** | **First Coulombic Efficiency (%)** | **Carbon Content (%)** | **200-Cycle Capacity Retention (%)** |
|---|---|---|---|---|---|
| Example 1 | 3-aminopropyltriethoxysilane | 1267.4 | 86.3 | 55.3 | 86 |
| Example 21 | 3-(methacryloyloxy)propyltrimethoxysilane | 1194.5 | 89.4 | 57.3 | 90 |
| Example 22 | 3-aminopropyltrimethoxysilane | 1423.7 | 84.3 | 44.7 | 83 |

As can be analyzed from Table 6, different silane coupling agents result in different electrochemical performances of the lithium ion batteries made from the resulting silicon-carbon negative electrode materials. Using a silane coupling agent with a longer carbon chain as the reaction raw material results in a higher content of amorphous carbon ultimately deposited in the holes of the porous carbon. A higher content of amorphous carbon can improve the electrical conductivity of the silicon-carbon negative electrode material. However, a higher content of amorphous carbon leads to a decrease in the proportion of amorphous silicon formed in the holes, resulting in a decrease in the first charge capacity of the lithium ion battery.

Finally, it should be understood that the embodiments of the present application disclosed herein are illustrative of the principles of the embodiments of the present application. Other modified embodiments are also within the scope of the present application. Therefore, the embodiments disclosed in the present application are merely exemplary and not limiting. Those skilled in the art may adopt alternative configurations according to the embodiments in the present application to implement the present application. Therefore, the embodiments of the present application are not limited to those embodiments precisely described in the present application.

## Claims

1. A method for preparing a silicon-carbon negative electrode material, comprising:
removing an X group in a silane coupling agent to form a first product, wherein the molecular formula of the silane coupling agent is formula 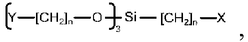 the first product is represented by formula 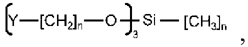 n is a positive integer greater than or equal to 1, the X group comprises at least one of an amino group, a chlorine group, a methyl group, a methoxy group and an ethoxy group, and a Y group comprises at least one of a vinyl group, an epoxy group, a methacryloyloxy group, a sulfhydryl group and a urea group;
after the first product is gasified, forming silicon-oxygen-carbon composite nanoparticles in holes of porous carbon by means of a pyrolysis reaction and an adsorption-deposition reaction, wherein the silicon-oxygen-carbon composite nanoparticles comprise a silicon-oxygen compound and amorphous silicon, as well as at least one of amorphous carbon and ceramic-phase silicon carbide; and
depositing a carbon coating layer on the surfaces of the silicon-oxygen-carbon composite nanoparticles.

2. The method for preparing a silicon-carbon negative electrode material according to claim 1, wherein the silane coupling agent comprises at least one of 3-(methacryloyloxy)propyltrimethoxysilane, 3-aminopropyltrimethoxysilane and 3-aminopropyltriethoxysilane.

3. The method for preparing a silicon-carbon negative electrode material according to claim 1, wherein a thermal treatment process is employed to remove the X group from the silane coupling agent, and the thermal treatment process is performed in an inert atmosphere and at a temperature of 500°C to 800°C.

4. The method for preparing a silicon-carbon negative electrode material according to claim 3, wherein before the thermal treatment process is employed to remove the X group from the silane coupling agent, the preparation method further comprises: removing impurities from the silane coupling agent at a temperature of 100°C to 200°C.

5. The method for preparing a silicon-carbon negative electrode material according to claim 4, wherein when the X group is an amino group or a chlorine group, the thermal treatment process is performed at a temperature of 500°C to 600°C; when the X group is a methyl group, the thermal treatment process is performed at a temperature of 600°C to 700°C; and when the X group is a methoxy group or an ethoxy group, the thermal treatment process is performed at a temperature of 700°C to 800°C.

6. The method for preparing a silicon-carbon negative electrode material according to claim 1, wherein when the X group is an amino group or a chlorine group, a hydrolysis process is employed to remove the X group from the silane coupling agent.

7. The method for preparing a silicon-carbon negative electrode material according to claim 1, wherein in terms of mass percentage, the silicon-oxygen-carbon composite nanoparticles account for 40% to 50% of the silicon-carbon negative electrode material.

8. The method for preparing a silicon-carbon negative electrode material according to claim 1, wherein the silicon-oxygen-carbon composite nanoparticles fill 40% to 70% of the volume of the holes.

9. The method for preparing a silicon-carbon negative electrode material according to claim 1, wherein in terms of mass percentage, the silicon-oxygen-carbon composite nanoparticles comprise: 80% to 95% of a silicon-oxygen compound, 5% to 10% of amorphous silicon, 0% to 6% of amorphous carbon, and 0% to 4% of ceramic-phase silicon carbide.

10. The method for preparing a silicon-carbon negative electrode material according to claim 1, wherein the reaction temperature for forming the silicon-oxygen-carbon composite nanoparticles in the holes of the porous carbon by means of the pyrolysis reaction and the adsorption-deposition reaction is 900°C to 1000°C.

11. The method for preparing a silicon-carbon negative electrode material according to claim 1, wherein the specific surface area of the porous carbon is 1500 to 2500 m²/g, and the volume of the holes is 0.6 to 1.5 cm³/g.

12. The method for preparing a silicon-carbon negative electrode material according to claim 11, wherein in the holes, the volume of micropores accounts for more than 80% of the volume of the holes, and the remainder is mesopores, wherein the pore diameter of the micropores is less than 2 nm, and the pore diameter of the mesopores is 2 nm to 50 nm.

13. The method for preparing a silicon-carbon negative electrode material according to claim 1, wherein the process of depositing the carbon coating layer on the surfaces of the silicon-oxygen-carbon composite nanoparticles comprises: depositing a first carbon coating layer on the surfaces of the silicon-oxygen-carbon composite nanoparticles; and depositing a second carbon coating layer on the surface of the first carbon coating layer, wherein the first carbon coating layer is an ordered-grown amorphous carbon layer, and the second carbon coating layer has a convex-concave structure on the surface.

14. A silicon-carbon negative electrode material, comprising: porous carbon, the porous carbon comprising holes, silicon-oxygen-carbon composite nanoparticles being formed in the holes, the silicon-oxygen-carbon composite nanoparticles comprising a silicon-oxygen compound and amorphous silicon, as well as at least one of amorphous carbon and ceramic-phase silicon carbide; and a carbon coating layer being present on the surfaces of the silicon-oxygen-carbon composite nanoparticles.

15. The silicon-carbon negative electrode material according to claim 14, wherein the specific surface area of the porous carbon is 1500 to 2500 m²/g, and the volume of the holes is 0.6 to 1.5 cm³/g.

16. The silicon-carbon negative electrode material according to claim 15, wherein in the holes, the volume of micropores accounts for more than 80% of the volume of the holes, and the remainder is mesopores, wherein the pore diameter of the micropores is less than 2 nm, and the pore diameter of the mesopores is 2 nm to 50 nm.

17. The silicon-carbon negative electrode material according to claim 14, wherein the carbon coating layer comprises: a first carbon coating layer coating the surfaces of the silicon-oxygen-carbon composite nanoparticles; and a second carbon coating layer coating the surface of the first carbon coating layer, wherein the first carbon coating layer is an ordered-grown amorphous carbon layer, and the second carbon coating layer has a convex-concave structure on the surface.

18. The silicon-carbon negative electrode material according to claim 14, wherein the silicon-oxygen-carbon composite nanoparticles fill 40% to 70% of the volume of the holes.

19. The silicon-carbon negative electrode material according to claim 14, wherein in terms of mass percentage, the silicon-oxygen-carbon composite nanoparticles comprise: 80% to 95% of a silicon-oxygen compound, 5% to 10% of amorphous silicon, 0% to 6% of amorphous carbon, and 0% to 4% of ceramic-phase silicon carbide.

20. A lithium ion battery, comprising a negative electrode, the negative electrode comprising the silicon-carbon negative electrode material according to any one of claims 14 to 19.
